# EUROPEAN PATENT APPLICATION

(11) **EP 2 740 786 A1**
(43) Date of publication of application: **11.06.2014**
(21) Application number: 12195807.8
(22) Date of filing: 06.12.2012
(51) Int. Cl.: C11D 11/00, C11D 17/00, C11D 3/10, C11D 3/37, C11D 3/20

(54) **Process for preparing detergent composition particles**

(71) Applicant: Solvay SA, 1120 Bruxelles (BE)
(72) Inventor: Geny, Joël, 1170 Brussels (BE); Thijssen, Marc, 3090 OVERIJSE (BE)
(74) Representative: Vande Gucht, Anne

(57) **Abstract**

Process for preparing detergent composition particles comprising sodium carbonate or bicarbonate particles loaded by incorporation of at least one detergent component according to which at least one detergent component is contacted in liquid state with reactive particles comprising at least 60% in weight sodium carbonate or bicarbonate, the contacting resulting in at least partial incorporation, said reactive particles having been obtained by a process comprising the steps of:
- (a) adding at least one alkali metal carbonate to an aqueous solution in order to form an aqueous composition; wherein the alkali metal carbonate comprises sodium carbonate and wherein the aqueous composition comprises at least one polycarboxylic acid and/or the salts thereof, in an amount of at least 200 ppm based on the weight of the aqueous composition; and
- (b) separating sodium bicarbonate starting from the aqueous composition, in order to obtain sodium bicarbonate particles, on one hand, and an aqueous mother liquor, on the other hand
- (c) optionally calcining at a temperature of at least 80°C the sodium bicarbonate particles in order to transform them into sodium carbonate particles.

## Description

### Field of the invention

The invention relates to a process for preparing detergent composition particles comprising sodium carbonate or sodium bicarbonate as carrier, loaded with at least one detergent ingredient.

### Background of the invention

Detergent compositions comprise usually numerous ingredients, among which are : bleaches, bleach activators, surfactants, enzymes, dyes, perfumes, anti foam agents, polymeric anti redeposition agents, corrosion inhibitors, ...

Several of such ingredients are frequently in a liquid or pasty state at room temperature.

On the other side, when detergent compositions are in the form of particles, it is important that those particles flow freely and are not self agglomerating. The presence of liquid or pasty ingredients in the composition can thus be problematic.

A known solution to this problem is to include in the detergent composition a solid carrier capable to incorporate, for instance by absorption, the liquid or pasty ingredients. After their incorporation in the carrier, which itself is in solid state and free flowing, those ingredients are no longer problematic.

Such a known carrier is sodium carbonate. In W02011061044 are described detergent particles comprising sodium carbonate whose crystalline structure has been modified by the use of crystal habit modifiers. Such modifiers are in the form of high polymers, which impact negatively the final cost of the detergent particles, particularly in view of the limited improvements of its carrier properties.

It is an object of the invention to provide a process for preparing at reasonable cost free flowing detergent composition particles comprising ingredients which are liquid or pasty at ambient temperature.

### Summary of the invention

Accordingly, the invention concerns a process for preparing detergent composition particles comprising sodium carbonate or bicarbonate particles loaded by incorporation of at least one detergent component according to which at least one detergent component is contacted in liquid state with reactive particles comprising at least 60% in weight sodium carbonate or bicarbonate, the contacting resulting in at least partial incorporation, said reactive particles having been obtained by a process comprising the steps of :
- (a) adding at least one alkali metal carbonate to an aqueous solution in order to form an aqueous composition; wherein the alkali metal carbonate comprises sodium carbonate and wherein the aqueous composition comprises at least one polycarboxylic acid and/or the salts thereof, in an amount of at least 200 ppm based on the weight of the aqueous composition; and
- (b) separating sodium bicarbonate starting from the aqueous composition, in order to obtain sodium bicarbonate particles, on one hand, and an aqueous mother liquor, on the other hand
- (c) optionally calcining at a temperature of at least 80°C the sodium bicarbonate particles in order to transform them into sodium carbonate particles.

The independent and dependent claims set out particular and preferred features of the invention. Features from the dependent claims may be combined with features from the independent or other dependent claims as appropriate.

The above and other characteristics, features and advantages of the present invention will become apparent from the following detailed description, which illustrates, by way of example, the principles of the invention.

### Brief description of the figures

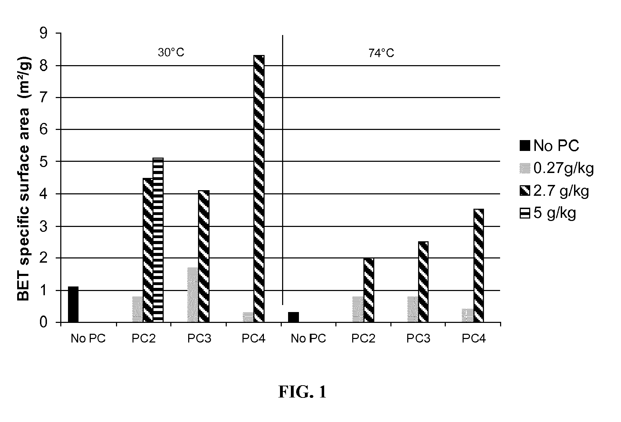

Figure 1 represents a graph plotting the BET specific surface area (in m²/g) of sodium bicarbonate particles, prepared without or in the presence of different polycarboxylic acids at different concentrations.

### Detailed description of the invention

As used herein, the singular forms "a", "an", and "the" include both singular and plural referents unless the context clearly dictates otherwise. By way of example, "an additive" means one additive or more than one additives.

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of".

Throughout this application, the term "about" is used to indicate that a value includes the standard deviation of error for the device or method being employed to determine the value.

As used herein, the term "average" refers to number average unless indicated otherwise.

As used herein, the terms "% by weight", "wt%", "weight percentage", or "percentage by weight" are used interchangeably.

The recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of end points also includes the end point values themselves (e.g. from 1.0 to 5.0 includes both 1.0 and 5.0). Any numerical range recited herein is intended to include all sub-ranges subsumed therein.

All references cited in the present specification are hereby incorporated by reference in their entirety. In particular, the teachings of all references herein specifically referred to are incorporated by reference.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the appended claims, any of the claimed embodiments can be used in any combination.

In an embodiment of the process according to the invention, the at least one detergent component is selected from liquid or pasty polymers, liquid polymeric solutions, preferably polycarboxylates polymer water solutions, perfumes, essential oils (vegetable, animal or synthetic essential oils) such as lanolin oil, sweet almond oil, coconut oil, jojoba oil, olive oil, apricot kernel oil, grape seed oil, hydrating agents such as aloe vera, acetamide MEA, fatty acids (oleic, myritic, linolied, stearic, lactic), non ionic, anionic or cationic surfactants. Non ionic surfactants are preferably obtained by ethoxylation of C12-C16 alcohols with 3 to 20 moles of ethylene oxide per alcohol mole. Perfumes comprise usually combinations of different base perfumes selected from alcohols, ketones, aldehydes, esters, ethers, nitriles. Such perfumes are commonly produced by Firmenish, Givaudan, IFF, Quest, Taaksago, for instance.

In another embodiment of the process according to the invention, anionic surfactants liquids or pastes are advantageously selected from linear alkylbenzenes sulfonic acids or linear alkylbenzene sodium sulfonates, primary or secondary C12-C16 alcohol sulfates, alkane sulfonates, fatty acid ester sulfonates and fatty acid soaps.

The detergent component can be in solid, liquid or pasty form at ambient temperature (20°C). In a preferred embodiment, the detergent component is in liquid or pasty form at ambient temperature, that is, when sheared, it flows. In this embodiment, its rest viscosity at 20°Cis generally less than 100.000 Pa.S, usually less than 10.000 Pa.S, frequently less than 1000 Pa.S.

In the process according to the invention, the detergent compound is contacted with the reactive particles to cause its incorporation. The incorporation can result both from adsorption and absorption. To this end, various devices can be used. Mixers creating during mixing a combination of low and high shear stresses are however preferred. Such combination of shear stresses can for instance be obtained in blade mixers such as the CB mixer produced by Lödige or the Kettemix reactor produced by Ballestra.

In the process according to the invention, it is also recommended to operate at temperatures below 250°C, preferably below 200°C, even below 150°C. Use of spray drying towers operating at high temperatures and in which the input products are in the liquid state, is to be avoided. When a mixer is used to contact the detergent compound with the reactive particles, the precise temperature value inside the mixer is to be determined as a function of the detergent compound properties (for instance viscosity) and final properties of the detergent composition which are to be obtained.

It can be advantageous in some cases to introduce, in the device wherein the detergent compound is contacted with the reactive particles, some additives such as zeolites, (of A, P or X type), silicates, additional sodium carbonate (or sodium hydroxide), phosphates, soaps, polyethylene glycols, or even water in very limited quantity. If zeolites are to be used, it can be recommended to add at least part of it at the end of the contacting step, to ensure that they coat the surface of the detergent particles and thereby reduce caking. If additional sodium carbonate is used, its specific surface is not critical and should be counted separately from the sodium carbonate having preferably high specific surface which can be used in the reactive particles. Indeed, the function of this additional sodium carbonate is to neutralize, if necessary, certain acids which would be present in the detergent composition particle or to act as a bulking agent.

The detergent composition particles comprise advantageously less than 10% in weight water, preferably less than 5 %. If necessary, a drying step, for instance by fluid bed drying, can be added to the process according to the invention.

In the process according to the invention, the reactive particles can incorporate a high quantity of detergent component. This is particularly true when the reactive particles have a high specific surface, as described here above. Generally the quantity of detergent component incorporated in the reactive particles is at least 10%, often at least 20%, frequently at least 50%. Normally, this quantity does not exceed 200%, or 150% or even 130%. Those low and high limits can be all combined, depending on the circumstances, but generally the quantities comprised between 50% and 175%, or between 75% and 150%, even between 85% and 125% are most convenient. The percentages are the ratio between the weight of incorporated at least one detergent component (having been adsorbed or absorbed) and the weight of the reactive particles before contacting with the detergent component.

In particular embodiments of the process according to the invention, the detergent composition particles can comprise from 1 to 80% in weight, or from 10 to 70% or from 20 to 65% of reactive particles.

In other particular embodiments, the total quantity of at least one detergent component represents from 5 to 80% or from 10 to 70% or from 20 to 60% in weight of the detergent composition particles.

In some cases part of the total quantity of this at least one detergent component is not incorporated in the reactive particles. This non incorporated quantity is however preferably less than 50%, more preferably less than 25%, in some cases less than 10% or even less than 5% in weight of the total quantity.

The step (a) of the process according to the invention comprises adding at least one alkali metal carbonate comprising sodium carbonate to an aqueous solution thereby forming an aqueous composition.

As used herein, the term "alkali metal carbonate" refers to any compound comprising the carbonate -CO₃²⁻ group and an alkali metal. Preferably, the alkali metal is sodium.

The alkali metal carbonate used in the process can be commercially available sodium carbonate. Non-limiting examples of a suitable source for the sodium metal carbonate can be a mineral comprising sodium carbonate, such as trona, nahcolite, Wegscheiderite or Decemite. Trona is a mineral that can contain about 90-95 % sodium sesquicarbonate (Na₂CO₃.NaHCO₃.2H₂O).

In an embodiment, the alkali metal carbonate comprises a sesquicarbonate, preferably sodium sesquicarbonate. Preferably, the alkali metal carbonate comprises sodium sesquicarbonate dihydrate (Na₂CO₃.NaHCO₃.2H₂O). The sesquicarbonate can have different origins. It can be produced artificially out of different sodium sources. However, it is particularly interesting that sesquicarbonate derives from a natural trona ore. Suitable sodium sesquicarbonate can have a mean particle diameter comprised between 0.1 and 10mm. The mean diameter is the D50, which is the diameter such that half of the particles, in weight, have a diameter lower than the specified value. For non spherical particles, the diameter is the equivalent spherical one.

In some embodiments, the alkali metal carbonate is calcined alkali metal carbonate, for example calcined sesquicarbonate. In this embodiment, alkali metal carbonate is first calcined, preferably at a temperature comprised between 100°C and 4000°C, before its addition to the aqueous solution.

Preferably, the alkali metal carbonate is sodium carbonate and the aqueous solution also comprises sodium bicarbonate. In an embodiment, the aqueous solution can further comprise sodium chloride.

In an embodiment, the aqueous composition of step (a) comprises sodium carbonate and sodium bicarbonate. Preferably, the weight ratio of sodium carbonate to sodium bicarbonate is higher than 1.0, preferably higher than 2.0, preferably higher than 3.0, preferably higher than 5.0.

The aqueous composition of step (a) can have a pH of at least 8.

In some embodiments, at least 100 g of alkali metal carbonate per kg of aqueous solution is added to the aqueous solution; preferably at least 150 g of alkali metal carbonate per kg of aqueous composition, preferably at least 200 g of alkali metal carbonate per kg of aqueous composition.

According to the invention, the aqueous composition comprises at least 200 ppm of at least one polycarboxylic acid and/or salts thereof, with ppm being based on the total weight of the aqueous composition. The aqueous composition can comprise at least 300 ppm of polycarboxylic acid and/or salts thereof, for example at least 400 ppm, for example at least 500 ppm, for example at least 600 ppm, preferably at least 1000 ppm, preferably at least 2000 ppm of polycarboxylic acid and/or the salts thereof, preferably at least 2500 ppm, preferably at least 2700 ppm of polycarboxylic acid and/or the salts thereof, with ppm being based on the weight of the aqueous composition. As used herein, the term "ppm" refers to weight parts per million. For example, the aqueous composition can comprise at least 1 g of polycarboxylic acid and/or the salts thereof per 1 kg of aqueous composition, preferably at least 1.5 g, more preferably at least 2g/kg, yet more preferably at least 2.5g/kg, for examples at least 2.7 g/kg, and for example at most 5g of polycarboxylic acid and/or the salts thereof per 1 kg of aqueous composition.

As used herein, the term "polycarboxylic acid or salt thereof" refers to acids or salts thereof comprising two or more carboxylate -COO⁻ groups. In a preferred embodiment, the polycarboxylic acid or salts thereof is in the form of an acid or a sodium salt. In an embodiment, the polycarboxylic acid or salt thereof is an acid. In an embodiment, the polycarboxylic acid or salt thereof is a sodium salt.

The polycarboxylic acid and/or salts thereof can be selected from the group comprising sodium polyacrylate; copolymers of acrylic acid and maleic acid; polyacrylic acid, and mixtures or blends thereof; preferably wherein the polycarboxylic acid and/or salts thereof is sodium polyacrylate or a copolymer of acrylic acid and maleic acid, preferably wherein the polycarboxylic acid and/or salts thereof is a copolymer of acrylic acid and maleic acid.

As used herein, the term "sodium polyacrylate" refers to polymers comprising the general formula (I) below, wherein n is at least 2:

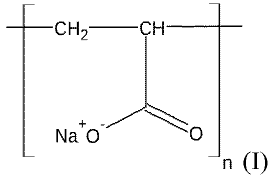

As used herein, the term "polyacrylic acid" refers to polymers comprising the general formula (II) below, wherein n is sat least 2: (II)

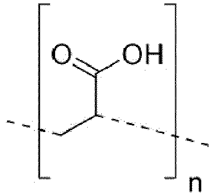

In an embodiment, the polycarboxylic acid is a copolymer of acrylic acid and maleic acid.

As used herein, the term "copolymer of acrylic acid and maleic acid" refers to polymers comprising the general formula (III) below, wherein x and y are at least 2:

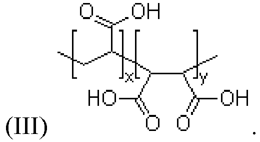

In an embodiment, the polycarboxylic acid or salts thereof has an average molar mass ranging from 1 to 200 kg/mol, preferably from 5 to 100 kg/mol, preferably from 10 to 90 kg/mol, preferably from 20 to 80 kg/mol, preferably from 30 to 70 kg/mol.

The steps (a) and (b) of the process according to the invention can be operated either in a batch/discontinuous mode or in a continuous mode.

The steps (a) and (b) of the process can be performed at a temperature of at most 70°C, for example at a temperature of at most 60°C, for example at a temperature of at most 50°C, preferably at a temperature of at most 40°C, and more preferably at a temperature of at most 30°C.

The next step comprises separating sodium bicarbonate starting from the aqueous composition, in order to obtain sodium bicarbonate particles, on one hand, and an aqueous mother liquor, on the other hand.

In advantageous embodiments, the process comprises injecting a gas comprising CO₂ into the aqueous composition, in order to carbonate it and produce sodium bicarbonate.

In an embodiment the gas comprises at least 20% in weight, advantageously 40%, preferably 60%, more preferably 80% CO₂. Preferably, the gas is pure (100%) CO₂.

The reaction can be performed in a stirred gas liquid reactor, preferably comprising a gas injector able to distribute the gas homogeneously into the reactor. The liquid constitutes advantageously the continuous phase inside the reactor, the gas being injected at the bottom and moving upwards. The reactor can comprises cooling means to maintain the process at the desired temperature. The CO₂ can have different origins. In one embodiment, the CO₂ can be obtained from a natural gas plant, for example after having been concentrated for example through an amine process. In another embodiment, the CO₂ can be from a soda ash plant.

In an embodiment, the aqueous solution can be seeded by adding nucleating agents. For example, substantially crystalline sodium bicarbonate can be added as nucleating agent.

The separation of the particles from the suspension can be carried out by any appropriate mechanical separating means, for example by settling, by centrifugation, by filtration or by a combination of these separating means. The separation can be done on any appropriate equipment. Without being limitative, the equipment can be chosen among: decanters, rotative filters, band filters, centrifuges and their combinations. The sodium bicarbonate particles may be washed with fresh water to remove part of the production solution containing sodium carbonate. The drying of the particles can be realized on any appropriate equipment. Advantageously the drying is operated in a fluid bed, a rotary dryer, a flash pneumatic conveyor dryer, or a gravity dryer. The final temperature of the particles exiting the dryer should be low enough to avoid thermal decomposition of sodium bicarbonate into sodium carbonate. In an advantageous mode, the drying of the solid particles is operated with a CO₂ enriched atmosphere. This enables to transform part of the dissolved sodium carbonate, present in production solution and impregnating the solid particles, into sodium bicarbonate.

The sodium bicarbonate crystals produced in steps (a) and (b) of the process according to the invention are generally of high purity, and have a very special structure with a high specific area, and a unique granulometry. Moreover, they are usually extremely advantageous for many applications, in which cost is a major aspect.

As used herein, the term "particles" refers to crystallites or primary particles and clusters of primary particles. Crystallites or primary particles are defined as the smallest discrete particles that can be seen by Electron Microscopy analysis.

In some embodiments, the sodium bicarbonate particles have an average equivalent spherical diameter D50 of at least 10 µm, as measured by laser light scattering.

As used herein, the term "equivalent spherical diameter" refers to the diameter of a sphere having the same equivalent volume as the particle. As used herein, particle average size may be expressed as "Dxx" where the "xx" is the volume percent of that particle having a size equal to or less than the Dxx. The D90 is defined as the particle size for which ninety percent by volume of the particles has a size lower than the D90. The D50 is defined as the particle size for which fifty percent by volume of the particles has a size lower than the D50. The D10 is defined as the particle size for which fifty percent by volume of the particles has a size lower than the D10. The D10, D50 and D90 can be measured by laser diffraction analysis, for example on a Malvern type analyzer. Suitable Malvern systems include the Malvern MasterSizer S, Malvern 2000, Malvern 2600 and Malvern 3600 series.

In some embodiments, the sodium bicarbonate particles produced in steps (a) and (b) have an average equivalent spherical diameter D90 of at least 60 µm, as measured by laser light scattering.

In some embodiment, the sodium bicarbonate particles produced in steps (a) and (b) have an average BET specific surface area of at least 1.0 m²/g. In preferred embodiments, the average BET specific surface area is at least 2.0 m²/g, preferably at least 3.0 m²/g, preferably at least 4.0 m²/g, preferably at least 6.0 m²/g.

The sodium bicarbonate particles produced in steps (a) and (b) of the process of the invention are substantially crystalline. As used herein, the term "substantially crystalline" is understood to mean that more than 50 % by weight, especially more than 75 % by weight, more particularly more than 90 % by weight of the particles are in the form of crystalline material when analyzed by an X-ray diffraction technique.

In the present invention, sodium bicarbonate particles produced in steps (a) and (b) have advantageously an average equivalent spherical diameter D50 of at least 10 µm, a D90 of at least 60 µm, as measured by laser light scattering, and an average BET specific surface area of at least 4.0 m²/g.

In preferred embodiments, the average BET specific surface area of the sodium bicarbonate particles produced in steps (a) and (b) ranges from 2.0 m²/g to 10.0 m²/g, preferably from 3.0 m²/g to 10.0 m²/g, preferably from 4.0 m²/g to 10.0 m²/g, in some instances preferably from 6.0 m²/g to 10.0 m²/g, even from 8.0 m²/g to 10.0 m²/g.

Preferably, more than 50 % by weight, especially more than 75 % by weight, more particularly more than 90 % by weight of these particles are in the form of crystalline material when analyzed by an X-ray diffraction technique.

In a preferred embodiment, theses particles comprise at least 80.0% by weight of sodium bicarbonate, preferably at least 90% by weight of sodium bicarbonate, preferably at least 95% by weight of sodium bicarbonate, preferably at least 98% by weight of sodium bicarbonate, preferably at least 99% by weight of sodium bicarbonate, preferably at least 99.9% by weight of sodium bicarbonate, based on the total weight of the particles.

The present invention also encompasses a process for preparing sodium carbonate particles, comprising the step of converting the sodium bicarbonate particles obtained by the process according to the first aspect of the invention to sodium carbonate by calcination at a temperature of at least 80°C, wherein the sodium carbonate particles have an average BET specific surface area of at least 10 m²/g, preferably at least 15 m²/g.

These sodium carbonate particles are advantageously prepared by calcining the sodium bicarbonate particles according to the second aspect of the invention.

This additional calcining step can be performed at a temperature of at least 80, preferably at least 100°C, for example at least 200°C, preferably at least 220°C, preferably at least 240°C. This calcining step can last for at least 1 hour.

The present invention also encompasses sodium carbonate particles obtained by the process described herein. For example, the invention encompasses sodium carbonate particles obtained by the process of calcination, said particles having an average equivalent spherical diameter D50 of at least 10 µm, a D90 of at least 60 µm, as measured by laser light scattering, and an average BET specific surface area of at least 10 m²/g, preferably at least 15 m²/g.

The present invention also encompasses sodium carbonate particles, having an average equivalent spherical diameter D50 of at least 10 µm, a D90 of at least 60 µm, as measured by laser light scattering, and an average BET specific surface area of at least 10 m²/g, preferably at least 15 m²/g.

In preferred embodiments, the average equivalent spherical diameter D50 of the sodium carbonate particles according to the invention can be at least 20 µm, preferably at least 30 µm, preferably at least 40 µm, preferably at least 60 µm, preferably at least 80 µm. In an embodiment, the average equivalent spherical diameter D90 is at least 60 µm, preferably at least 100 µm, preferably at least 150 µm, preferably at least 200 µm.

The carbonates and bicarbonates particles used in the invention have particularly high BET specific surface area and good storage stability.

The invention concerns also detergent composition particles obtainable by the process according to the invention.

The invention is illustrated but not limited by the following examples.

### Examples

### Test methods

Granulometry (D10, D50 and D90) was measured by a solid state laser, on a Malvern MasterSizer S.

Specific surface area was measured using the nitrogen adsorption isotherm and the BET model (Brunauer, Emmett and Teller). Measurements were carried out with a Micromeritics Gemini 2360 Surface Area Analyzer.

### Ingredients

Polycarboxylate 2 (PC2): sodium polyacrylate (NaPA) with a molecular weight of 40 000 - 60 000 g/mol and 40% active material. PC2 is commercially available as Maredis 146 from BASF.

Polycarboxylate 3 (PC3): polyacrylic acid with a molecular weight of 100 000 g/mol and 35% active material. PC3 is commercially available as Sokalan PA 80S from BASF.

Polycarboxylate 4 (PC4): sodium salt of copolymer of acrylic acid and maleic acid with a molecular weight of 70 000 g/mol and 40% active material. PC4 is commercially available as Sokalan PC 5 from BASF.

Polycarboxylate 5 (PCS): copolymer of acrylic acid and maleic acid with a molecular weight of 3 000 g/mol and 50% active material. PC5 is commercially available from Sigma-Aldrich.

Commercially available sodium chloride (NaCl) from ESCO Dombasle (FR), sodium carbonate (Na₂CO₃) and sodium bicarbonate (NaHCO₃) from Solvay Plant in Dombasle were used.

### Example 1

A thermally conditioned double walled reactor, containing a starting solution rich in carbonate was maintained at a temperature of 30°C. The starting solution contained [Na₂CO₃] = 208 g/kg; and [NaHCO₃] = 29 g/kg. The production process was performed with or without polycarboxylate. Gaseous CO₂ (100%) was injected at 800 l/hr for 2 hrs. After 2h during which solid particles containing crystals of sodium bicarbonate were precipitated, the content of the reactor was filtered in order to separate the solid particles from the mother liquor, and air dried. The same experiment was repeated at 74°C, with a starting solution containing [Na₂CO₃] = 208 g/kg; and [NaHCO₃] = 57 g/kg.

0.27g of PC2, PC3 or PC4 polycarboxylate per kg of water solution were tested. The same experiment was repeated without polycarboxylate (no PC), and with either 2.7 g or 5g of PC2, PC3 or PC4 polycarboxylate per kg of water.

The results are shown in Figure 1. The results showed that performing the production process in the presence of polycarboxylate, allowed the production of particles having larger specific surface areas. The results also showed that increasing the concentrations in polycarboxylic acid and/or salt thereof can increase sodium bicarbonate particle surface area. The results also showed that working below 70°C can further increased sodium bicarbonate particle' surface area.

### Example 2

A thermally conditioned double walled reactor, containing a starting solution rich in carbonate was maintained at a temperature of 30°C. The starting solution contained [Na₂CO₃] = 208 g/kg; and [NaHCO₃] = 29 g/kg and [NaCl] = 0.7 g/kg. The production process was performed with 2,7g of PC5 polycarboxylate per kg of water solution or without polycarboxylate. Gaseous CO₂ (100%) was injected at 800 l/hr for 2 hrs. After 2h during which solid particles containing crystals of sodium bicarbonate were precipitated, the content of the reactor was filtered in order to separate the solid particles from the mother liquor, and air dried.

The sodium bicarbonate particles were further calcined in an over at 205°C during 3 hours followed by 1 h of degasifying à 250°C, thereby obtaining sodium carbonate. The BET specific surface area of the particles was then measured after the production, and compared to commercially available bicarbonate particles. The storage stability of the particles was evaluated and the BET specific surface area of the particles was measured again after 1 month. The results are shown in Table 1.

**Table 1**

| Samples | BET area (m²/g) | |
|---|---|---|
| | Sodium bicarbonate particles | Sodium carbonate particles (Obtained after calcination of the bicarbonate particles) |
| prepared without PC5 | 0.1 | 4.5 |
| prepared with PC5 | 8.3 | 21.0-22.9 |
| prepared with PC5. Stability at 1 month of storage | 7.4-8.0 | 12.0 |
| Bicar ® 0/13 (commercially available sodium bicarbonate) | 0.1 | 4.2 |
| Bicar ® 13/50 (commercially available sodium bicarbonate) | <0.1 | 4.0 |
| Bicar ® 27/50 (commercially available sodium bicarbonate) | <0.1 | 4.7 |

The results showed that performing the production process in the presence of 2.7g/kg of polycarboxylate, allowed the production of particles having high specific surface areas. The results also showed that after calcination of the bicarbonate particles obtained by the present process, sodium carbonate particles with very high BET area were obtained, and that the particles were particularly stable in time.

It is to be understood that although preferred embodiments have been discussed for providing embodiments according to the present invention, various modifications or changes may be made without departing from the scope and spirit of this invention.

## Claims

1. A process for preparing detergent composition particles comprising sodium carbonate or bicarbonate particles loaded by incorporation of at least one detergent component according to which at least one detergent component is contacted in liquid state with reactive particles comprising at least 60% in weight sodium carbonate or bicarbonate, the contacting resulting in at least partial incorporation, said reactive particles having been obtained by a process comprising the steps of:
- (a) adding at least one alkali metal carbonate to an aqueous solution in order to form an aqueous composition; wherein the alkali metal carbonate comprises sodium carbonate and wherein the aqueous composition comprises at least one polycarboxylic acid and/or the salts thereof, in an amount of at least 200 ppm based on the weight of the aqueous composition; and
- (b) separating sodium bicarbonate starting from the aqueous composition, in order to obtain sodium bicarbonate particles, on one hand, and an aqueous mother liquor, on the other hand
- (c) optionally calcining at a temperature of at least 80°C the sodium bicarbonate particles in order to transform them into sodium carbonate particles.

2. The process according to claim 1 wherein the reactive particle have a BET specific surface of more than 4 m²/g.

3. The process according to any of the preceding claims, wherein step (b) comprises the step of contacting the aqueous composition with a gas comprising carbon dioxide.

4. The process according to any of the preceding claims, wherein the aqueous composition of step (a) comprises sodium carbonate and sodium bicarbonate, and wherein the weight ratio of sodium carbonate to sodium bicarbonate is higher than 1.0.

5. The process according to any of the preceding claims, wherein the at least one polycarboxylic acid and/or the salt thereof is selected from the group comprising sodium polyacrylate, copolymers of acrylic acid and maleic acid, and polyacrylic acid, and blends thereof.

6. The process according to any of preceding claims, wherein the aqueous composition of step (a) has a pH of at least 8.

7. The process according to any of the preceding claims, wherein steps (a) and (b) of the process are performed at a temperature of at most 70°C.

8. The process according to any of the preceding claims, wherein the aqueous composition comprises at least 100 g of alkali metal carbonate per kg of aqueous composition.

9. The process according to any of the preceding claims, wherein the aqueous composition comprises from 0.2 g to 5.0 g of the polycarboxylic acid and/or salts thereof per kg of aqueous composition.

10. The process according to any of the preceding claims, wherein the sodium bicarbonate particles have an average equivalent spherical diameter D50 of at least 10 µm, as measured by laser light scattering.

11. The process according to any of the preceding claims, wherein the sodium bicarbonate particles have an average equivalent spherical diameter D90 of at least 60 µm, as measured by laser light scattering.

12. The process according to any of the preceding claims, wherein the sodium bicarbonate particles have an average BET specific surface area of at least
1.0 m²/g.

13. The process according to any of the preceding claims, wherein the reactive particles comprise at least 60% in weight of sodium bicarbonate, the particles having an average equivalent spherical diameter D50 of at least 10 µm and a D90 of at least 60 µm.

14. The process according to any of the preceding claims, wherein the reactive particles are calcined and comprise at least 60% in weight of sodium carbonate, the particles having an average BET specific surface area of at least 10 m²/g, preferably at least 15 m²/g.

15. The process according to the preceding claim, wherein the reactive particles have an average equivalent spherical diameter D50 of at least 10 µm and a D90 of at least 60 µm, as measured by laser light scattering.

16. Detergent composition particles obtainable by the process according to any of preceding claims.
